# EUROPEAN PATENT APPLICATION

(11) **EP 4 810 336 A1**
(43) Date of publication of application: **23.09.2026**
(21) Application number: 25165403.4
(22) Date of filing: 21.03.2025
(51) Int. Cl.: B60T 17/22

(54) **METHOD AND SYSTEM FOR CONDITION MONITORING OF A PNEUMATIC SYSTEM OF A ROAD VEHICLE**

(71) Applicant: ZF CV Systems Poland Sp. z o.o. CVS Wroclaw Plant, 53-238 Wroclaw (PL)
(72) Inventor: PAWLOWSKI, Karol, Wroclaw (PL); NYCZ, Karol, Wroclaw (PL); PAKULA, Michal, Wroclaw (PL); BLAZEJAK, Lukasz, Borowa (PL); WALCZAK, Jacek, Bielany Wroclawskie (PL); WIERUSZEWSKI, Filip, Wroclaw (PL); KOLKOWSKI, Kamil, Wroclaw (PL)
(74) Representative: ZF Friedrichshafen AG

(57) **Abstract**

A method for condition monitoring of a pneumatic system of a road vehicle, comprising the steps: repeatedly sensing (S1) a condition parameter of a system component of the pneumatic system with a sensor system, determining (S2) a time behaviour of the condition parameter, determining (S3) a predictive condition state of the pneumatic system based on the time behaviour, verifying (S4), if a predefined condition criterion for the pneumatic system is fulfilled in a future operational state of the pneumatic system based on the predictive condition state, and controlling (S5) a monitoring device of the road vehicle based on the step of verifying (S4). Further a monitoring system for condition monitoring of a pneumatic system of a road vehicle and a road vehicle, which comprises such a monitoring system. Further also a method for retrofitting a road vehicle.

## Description

### Technical field

The present invention relates to a method for condition monitoring of a pneumatic system of a road vehicle. The present invention also relates to a monitoring system for condition monitoring of a pneumatic system of a road vehicle. The present invention further relates to a road vehicle, which comprises a pneumatic system and the monitoring system. The present invention further relates to a method for retrofitting a road vehicle with the monitoring system.

### Prior art

It is known from the prior art that the functionality and safety of a road vehicle is determined based on real-time decision-making systems, which are based on a current condition monitoring of safety relevant systems of the road vehicle. Such a current condition monitoring of safety relevant systems may reveal a current failure state of these systems, which is determined in real-time. Based thereon, a shutdown of the road vehicle may be triggered to avoid technical and human damage. Such a shutdown, which is based on an unpredicted failure state of the safety relevant systems, does not avoid a remaining technical and human risk of damage, from which technical and human damage can arise even before or during the shutdown.

### Description of the invention

An aspect describes a method for condition monitoring of a pneumatic system of a road vehicle. The road vehicle may for example be a truck, a bus, a car or a trailer of one of these vehicles. The pneumatic system may provide working compressed air for operating a pneumatic working device on the road vehicle. The pneumatic system may for example be a pneumatic brake system of the road vehicle or a pneumatic suspension system of the road vehicle or may comprise at least one of these systems.

The condition monitoring of the pneumatic system may be a safety monitoring of the pneumatic system. According to an embodiment of the method, the method may be performed for a wear condition monitoring of at least one component of the pneumatic system. A wear condition of the at least one component may result in a failure state of the pneumatic system, which may be a future failure state.

The method comprises the step of sensing at least one condition parameter of at least one system component of the pneumatic system with a sensor system. The sensor system is sensorically connected to the pneumatic system. The step of sensing is performed repeatedly. The sensor system may be arranged on the road vehicle. The sensor system may comprise at least one sensor, which is sensorically connected to the at least one system component of the pneumatic system.

The condition parameter may be a pneumatic working parameter, which defines a pneumatic working condition for the at least one system component of the pneumatic system, for example an air pressure, which is present at or provided by the at least one system component. The condition parameter may be a pneumatic operating parameter, which defines a pneumatic operating condition for the at least one system component of the pneumatic system, for example a component temperature, which is present at the at least one system component. The condition parameter may be a pneumatic influencing parameter, which defines a pneumatic influencing condition for the at least one system component of the pneumatic system, for example a component vibration, which is caused by the operation of the road vehicle, and which is present at the at least one system component. The pneumatic influencing parameter may be an external influencing parameter, which influences the operation of the pneumatic system, for example an external weather condition.

The at least one system component of the pneumatic system may be at least one of a pneumatic working component of the pneumatic system, for example an air compressor, and a pneumatic driven device of the pneumatic system, for example a pneumatic brake or a pneumatic suspension. The sensor system and the at least one sensor, respectively, may be sensorically connected to the pneumatic working component. The sensor system and the at least one sensor, respectively, may be sensorically connected to the pneumatic working component.

The method comprises the further step of determining a time behaviour of the repeatedly sensed condition parameter. The time behaviour may comprise or may be based on the repeatedly sensed condition parameter. The time behaviour may comprise a function of time of the repeatedly sensed condition parameter. The time behaviour may be based on at least one condition parameter, which has been repeatedly sensed in the past. The time behaviour may thus be based on historic condition parameters of the at least one system component of the pneumatic system. The time behaviour may be based on a condition parameter, which has been currently sensed. Alternatively or additionally to the historic condition parameters, the time behaviour may be based on a current condition parameter of the at least one system component of the pneumatic system. The step of determining the time behaviour may be performed based on a cloud integration of the repeatedly sensed condition parameter. Additionally or alternatively, at least one further step of the method may be performed based on a cloud integration.

The method comprises the further step of determining a predictive condition state of the pneumatic system based on the determined time behaviour. The predictive condition state is a future condition state of the pneumatic system. The step of determining may comprise a determining of the predictive condition state by applying the function of time, wherein the predictive condition state is a functional value of the function of time, which lies in the future. The predictive condition state may for example be determined by applying a parameter estimation for the predictive condition state based on the determined time behaviour. The parameter estimation may comprise a regression analysis or an extrapolation method. The predictive condition state may be determined based on a parameter trend of the repeatedly sensed condition parameter. The parameter trend may be for example a linear regression of the repeatedly sensed condition parameter. Alternatively or additionally to the parameter estimation, the predictive condition state may for example be determined by applying at least one of a decision tree model and a machine learning model for the predictive condition state based on the determined time behaviour. The machine learning model may be adapted to a configuration of the pneumatic system.

The predictive condition state may be a pneumatic working state of the at least one system component of the pneumatic system, for example a predictive air pressure, which is present at or provided by the at least one system component in the future. The condition parameter may be a pneumatic operating parameter, which defines a pneumatic operating condition for the at least one system component of the pneumatic system, for example a predictive component temperature, which is present at the at least one system component in the future. The condition parameter may be a pneumatic influencing parameter, which defines a pneumatic influencing condition for the at least one system component of the pneumatic system, for example a predictive component vibration, which is caused by the operation of the road vehicle, and which is present at the at least one system component in the future.

The method comprises the further step of verifying, if a predefined condition criterion for the pneumatic system is fulfilled in a future operational state of the pneumatic system by the determined predictive condition state. A verification result, which may result from the step of verifying, may be that the predefined condition criterion is fulfilled in the future operational state. Another verification result, which may result from the step of verifying, may be that the predefined condition criterion is not fulfilled in the future operational state. The method may comprise a further step of automatically determining the predefined condition criterion based on a machine learning model.

The predefined condition criterion may be a pneumatic working criterion for the at least one system component of the pneumatic system, for example a predefined air pressure, which can be present at or can be provided by the at least one system component. The predefined air pressure may be a safety critical air pressure. A respective verification result, which may result from the step of verifying, may be that the predefined air pressure is reached or exceeded by the predictive air pressure in the future operational state. The predefined condition criterion may be a pneumatic operating criterion for the at least one system component of the pneumatic system, for example a predefined component temperature, which can be present at the at least one system component.

The predefined component temperature may be a safety critical component temperature. A respective verification result, which may result from the step of verifying, may be that the predefined component temperature is reached or exceeded by the predictive component temperature in the future operational state. The predefined condition criterion may be a pneumatic influencing criterion for the at least one system component of the pneumatic system, for example a predefined component vibration, which is caused by the operation of the road vehicle, and which can be present at the at least one system component. The component vibration may be a safety critical component vibration. A respective verification result, which may result from the step of verifying, may be that the predefined component vibration is reached or exceeded by the predictive component vibration in the future operational state.

The method comprises the further step of controlling a monitoring device of the road vehicle based on a verification result, which results from the step of verifying. The verification result may be any verification result of the verification results described with respect to the preceding step of verifying. The monitoring device may be or may comprise a warning device, which is configured to warn an operator of the road vehicle of a safety critical failure state of the pneumatic system or of at least one system component. The warning device may for example be configured to output at least one of a visual warning signal, an auditive warning signal and a haptic warning signal. The monitoring device may be or may comprise a control device, which is configured to control an operating device of the road vehicle to prevent the pneumatic system or at least one system component from the safety critical failure state. The control device may be configured to automatically control the operation of the pneumatic system or at least one system component, for example to automatically shutdown the pneumatic system or at least one system component.

The method may provide a failure prediction for a pneumatic system on board of a road vehicle, which failure prediction is based on a predictive failure state of the pneumatic system. The failure prediction may be based on combining a real-time behaviour of the repeatedly sensed condition parameter and a predictive condition state monitoring of the pneumatic system. Precautionary measures for avoiding a safety relevant failure of the pneumatic system may already be taken in a still safe state of the pneumatic system. Technical and human damages may thus be reduced when using the method on a road vehicle. Taking maintanance and service measures for the pneumatic system in the safe state of the pneumatic system may also increase the performance of the pneumatic system over its lifetime. The method may be advantageously performed in an adaptable, scalable and modular manner, wherein the method may be retrofitted and performed for monitoring different pneumatic systems on different road vehicles.

According to an embodiment of the method, the pneumatic system may comprise at least one of a pneumatic brake system of the road vehicle and a pneumatic suspension system of the road vehicle. The pneumatic brake system may comprise at least one of the pneumatic working component of the pneumatic system. The pneumatic suspension system may comprise at least one of the pneumatic working component of the pneumatic system. The at least one system component of the pneumatic system may comprise at least one of a brake component of the pneumatic brake system and a suspension component of the pneumatic suspension system. The brake component may be for example an air compressor of the pneumatic brake system or the pneumatic brake. The suspension component may be for example an air compressor of the pneumatic suspension system or the pneumatic suspension.

According to a further embodiment of the method, the at least one system component of the pneumatic system may be at least one of an air compressor of the pneumatic system, an air dryer line of the pneumatic system, an air dryer of the pneumatic system and an air tank of the pneumatic system. The air dryer line may pneumatically connect the air compressor and the air dryer. The air tank may be configured to store or receive working air of the pneumatic system. Accordingly, the method may be performed modularly for different system components of a pneumatic system.

According to a further embodiment of the method, the at least one condition parameter may be at least one of a pressure parameter, a temperature parameter, a vibration parameter and a contamination parameter of the at least one system component of the pneumatic system. The pressure parameter may be an air pressure parameter. The sensor system may comprise a pressure sensor, which may be sensorically connected to the at least one system component of the pneumatic system. The pressure sensor may be configured to sense an air pressure which is present at or provided by the system component. The temperature parameter may be an air temperature parameter. The sensor system may comprise a temperature sensor, which may be sensorically connected to the at least one system component of the pneumatic system. The temperature sensor may be configured to sense an air temperature which is present at the system component. The sensor system may comprise a vibration sensor, which may be sensorically connected to the at least one system component of the pneumatic system. The vibration sensor may be configured to sense a vibration which is present at the system component. The sensor system may comprise a contamination sensor, which may be sensorically connected to the at least one system component of the pneumatic system. The contamination sensor may be configured to sense an air contamination which is present at the system component.

According to a further embodiment of the method, the method may comprise the further step of determining a current condition state of the pneumatic system based on the determined time behaviour. The current condition state is a present condition state of the pneumatic system. The step of determining may comprise a determining of the current condition state by applying the function of time, wherein the current condition state is a functional value of the function of time, which presently applies. The current condition state may for example be determined by applying a parameter estimation for the current condition state based on the determined time behaviour. The parameter estimation may comprise the regression analysis, an interpolation method or the extrapolation method. Alternatively or additionally to the parameter estimation, the current condition state may for example be determined by applying at least one of the decision tree model and the machine learning model for the predictive condition state based on the determined time behaviour. The machine learning model may be adapted to a configuration of the pneumatic system.

The current condition state may be a pneumatic working state of the at least one system component of the pneumatic system, for example a current air pressure, which is currently present at or provided by the at least one system component. The condition parameter may be a pneumatic operating parameter, which defines a pneumatic operating condition for the at least one system component of the pneumatic system, for example a current component temperature, which is currently present at the at least one system component. The condition parameter may be a pneumatic influencing parameter, which defines a pneumatic influencing condition for the at least one system component of the pneumatic system, for example a current component vibration, which is caused by the operation of the road vehicle, and which is currently present at the at least one system component.

The step of verifying may be further based on the determined current condition state. The step of verifying may be based on the determined current condition state and the determined predictive condition state. The step of verifying may further comprise verifying, if a predefined condition criterion for the pneumatic system is fulfilled in a current operational state of the pneumatic system by the current condition state. A further verification result, which may result from the step of verifying, may be that the predefined condition criterion is fulfilled in the current operational state. Another verification result, which may result from the step of verifying, may be that the predefined condition criterion is not fulfilled in the current operational state.

According to a further embodiment of the method, in the step of determining the time behaviour, a function of time for the condition parameter may be determined based on the repeatedly sensed condition parameter. The function of time may be any function of time as described to other embodiments. The function of time may be based on at least one of a regression analysis, a decision tree model and a machine learning model. Accordingly, the time behaviour may thus be determined in a reliable manner.

According to a further embodiment of the method, the predictive condition state may be a predictive wear state of the pneumatic system. The predictive wear state may be a predictive wear state of the at least one component of the pneumatic system. The predefined condition criterion may be a predefined failure criterion for the pneumatic system. The predefined failure criterion may be a predefined pneumatic failure criterion for the at least one system component of the pneumatic system. The predefined failure criterion may be a safety critical air pressure.

According to a further embodiment of the method, in the step of verifying the predefined condition criterion, it may be verified, if a predefined threshold for the predictive condition state of the pneumatic system is reached in the future operational state of the pneumatic system. The predictive condition state may be a predictive air pressure, and the predefined threshold may be the predefined air pressure. A respective verification result, which may result from the step of verifying, may be that the predefined air pressure is reached or exceeded by the predictive air pressure in the future operational state. The predictive condition state may be a predictive component temperature, and the predefined threshold may be the predefined component temperature. A respective verification result, which may result from the step of verifying, may be that the predefined component temperature is reached or exceeded by the predictive component temperature in the future operational state. The predictive condition state may be a predictive component vibration, and the predefined threshold may be the predefined component vibration. A respective verification result, which may result from the step of verifying, may be that the predefined component vibration is reached or exceeded by the predictive component vibration in the future operational state. The predictive condition state may be a predictive air contamination, and the predefined threshold may be the predefined air contamination, which is present at the system component. A respective verification result, which may result from the step of verifying, may be that the predefined air contamination is reached or exceeded by the predictive air contamination in the future operational state.

According to a further embodiment of the method, in the step of controlling a warning device of the road vehicle may be controlled based on the verification result. The warning device may be any warning device, which is described with respect to the step of controlling the monitoring device. The warning device may be configured for warning an operator of the road vehicle of a failure state of the pneumatic system. The failure state may be determined based on the verification result, which results from the step of verifying. The step of controlling the warning device may comprise a communicating of the failure state to the operator or to a data storage device, for example a cloud-based data storage device. The failure state may be further utilized as a basis or input in the step of determining the predictive condition state of the pneumatic system.

A further aspect describes a monitoring system for condition monitoring of a pneumatic system of a road vehicle. The monitoring system may be configured to perform the method according to the preceding aspect. The monitoring system may be retrofitted to the road vehicle. The monitoring system may be adapted to the pneumatic system.

The monitoring system comprises a sensor system, which is configured to repeatedly sense at least one condition parameter of at least one system component of the pneumatic system. The sensor system may be sensorically connected to the pneumatic system. The sensor system may be configured as the sensor system according to the preceding aspect.

The monitoring system further comprises a control module, which is configured to determine a time behaviour of the repeatedly sensed condition parameter, to determine a predictive condition state of the pneumatic system based on the determined time behaviour, to verify, if a predefined condition criterion for the pneumatic system is fulfilled in a future operational state of the pneumatic system based on the determined predictive condition state, and to control a monitoring device of the road vehicle based on the verified predefined condition criterion. Embodiments of one aspect may also apply to embodiments of any further aspect. Accordingly, the monitoring system may be configured to perform any step of the method according to the preceding aspect.

A further aspect describes a road vehicle, which comprises a pneumatic system and the monitoring system according to the preceding aspect for condition monitoring of the pneumatic system. The road vehicle may be configured as the road vehicle according to the respective preceding aspect.

A further aspect describes a method for retrofitting a road vehicle according to the preceding aspect with a monitoring system according to the respective preceding aspect for condition monitoring of a pneumatic system of the road vehicle. The method for retrofitting may comprise at least one step of the preceding method for condition monitoring of a pneumatic system.

The method comprises the step of automatically adapting the monitoring system to a configuration of the pneumatic system. The step of automatically adapting the monitoring system may be performed based on a machine learning model. According to an embodiment, the method may comprise the step of automatically determining the predefined condition criterion based on a machine learning model.

### Short description of figures

- Figur 1: schematically shows a monitoring system for condition monitoring of a pneumatic system of a road vehicle according to respective embodiments.
- Figur 2: shows a flowchart with steps of a method for condition monitoring of a pneumatic system of a road vehicle according to an embodiment.
- Figur 3: illustrates the determination of a predictive condition state of the pneumatic system according to an embodiment.

### Detailed description of embodiments

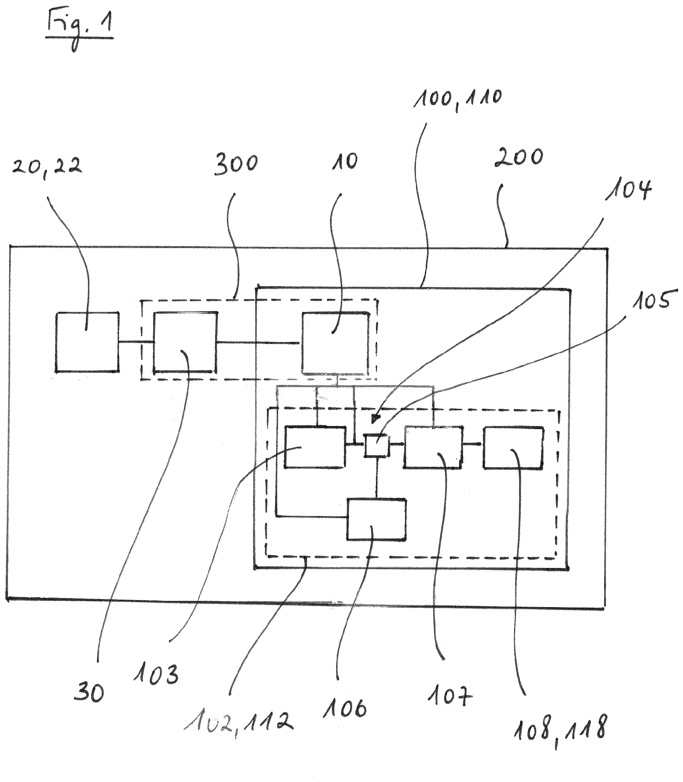

Figur 1 shows a road vehicle 200, which comprises a pneumatic system 100. The pneumatic system 100 is a pneumatic brake system 110 of the road vehicle 200, which is configured as an operational brake system of the road vehicle 200. The road vehicle 200 further comprises a monitoring system 300, wherein the road vehicle 200 has been retrofitted with the monitoring system 300. The monitoring system 300 is configured to monitor the operational condition of the pneumatic system 100. The monitoring system 300 is therefor sensorically connected to the pneumatic system 100.

The monitoring system 300 comprises a sensor system 10, which is sensorically connected to at least one system component 102 of the pneumatic system 100. The system component 102 is a brake component 112 of the pneumatic brake system 110. The sensor system 10 is integrated in the pneumatic system 100 according to the embodiment shown in figure 1. The monitoring system 300 further comprises a control module 30, which is connected to the sensor system 10. The control module 30 is a standalone control module or part of a vehicle control module. The monitoring system 300 further comprises a monitoring device 20, which is also connected to the control module 30. The monitoring device 20 is configured as a warning device 22 according to a further embodiment. The warning device 22 is configured to provide an alert signal, which provides information on a failure state of the pneumatic system 100 to an operator of the road vehicle 200.

The pneumatic system 100 comprises at least one of the system components 102 described in the following. The pneumatic system 100 comprises an air compressor 103, which generates compressed air. In an embodiment of the sensor system 10, the sensor system 10 is sensorically connected to the air compressor 103 and senses a condition parameter of the air compressor 103, for example an air pressure or air temperature of the compressed air. The pneumatic system 100 further comprises an air dryer 107, which dries the generated compressed air. In a further embodiment of the senor 10, the sensor system 10 is sensorically connected to the air dryer 107 and senses a condition parameter of the dried air, for example an air humidity, air pressure or air temperature of the compressed air. The pneumatic system 100 further comprises an air dryer line 104, which connects the air compressor 103 and the air dryer 107 via an air valve 105. In further embodiments of the sensor system 10, the sensor system 10 is sensorically connected to the air dryer line 104 and senses a condition parameter of the conducted air in the air dryer line 104, for example an air contamination, air pressure or air temperature of the conducted air. The pneumatic system 100 further comprises an air tank 106, which is connected to the air compressor 103 via the air valve 105. In further embodiments of the sensor system 10, the sensor system 10 is sensorically connected to the air tank 106 and senses a condition parameter of the stored air in the air tank 106, for example an air contamination, air pressure or air temperature of the stored air.

The pneumatic system 100 further comprises a pneumatic working device 108, which is operated with the compressed air. The pneumatic working device 108 is an operational brake 118 of the operational brake system of the road vehicle 200.

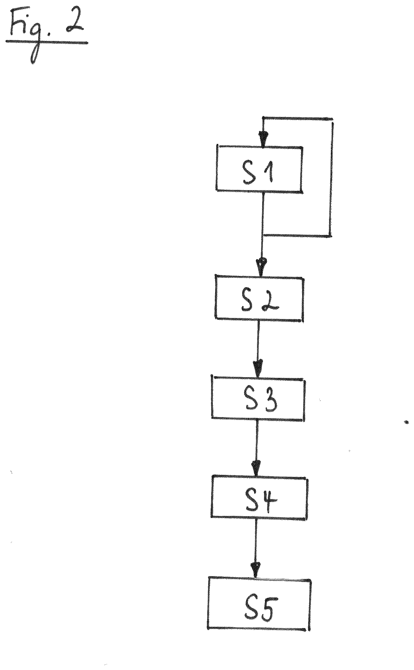

Figur 2 shows a flowchart with steps of a method for condition monitoring of the pneumatic system 100 of the road vehicle 200 in a time sequence of the steps according to an embodiment. In a first step S1 of the method, at least one condition parameter of at least one system component 102 of the pneumatic system 100 is sensed with the sensor system 10. The step S1 is performed repeatedly, wherein a time series of the condition parameter is sensed by the sensor system 10. In a second step S2 of the method, a time behaviour of the repeatedly sensed condition parameter is determined, wherein the time behaviour is determined based on an interpolation method for the time series of the condition parameter.

In a third step S3 of the method, a predictive condition state of the pneumatic system 100 is determined based on the determined time behaviour. The predictive condition state is determined based on an extrapolation method for the interpolated time series of the condition parameter. In a fourth step S4 of the method, it is verified, if a predefined condition criterion for the pneumatic system 100 is fulfilled in a future operational state of the pneumatic system 100 by the determined predictive condition state. The predefined condition criterion is a threshold for the condition parameter, which threshold defines a safety critical state of the pneumatic system 100. In a fifth step S5 of the method, the monitoring device 20 is controlled based on a verification result, which results from step S4. The monitoring device 20 is controlled to provide a safety warning, if it has been verified in step S4, that the predictive condition state fulfils the predefined condition criterion. Based thereon, the warning device 22, provides an alert for such a safety critical state of the pneumatic system 100.

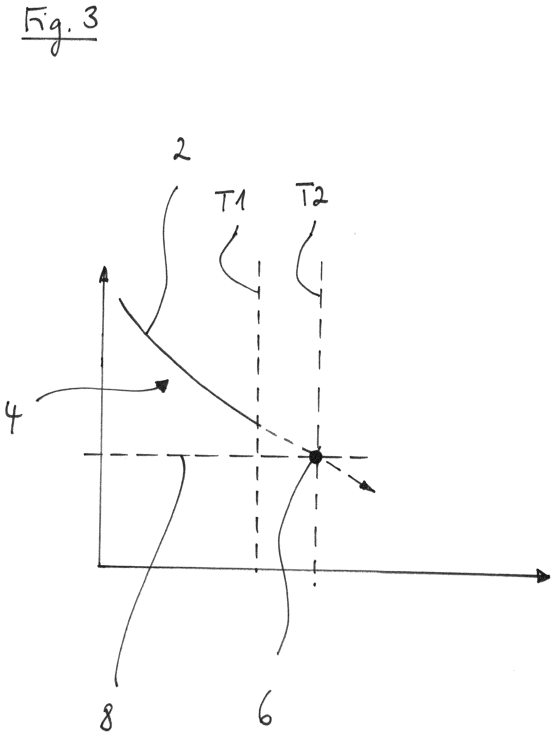

Figur 3 shows the time behaviour 4 of the sensed condition parameter 2 according to an exemplary embodiment. The condition parameter 2 has been sensed repeatedly until a present control time T1. Figure 3 further shows a condition criterion 8, which is defined as a threshold for the condition parameter 2. A predictive condition state 6 is determined, wherein the predictive condition state 6 comprises an extrapolated condition parameter 2 for a future failure time T2, at which the condition criterion 8 will be fulfilled. The extrapolated condition parameter 2 will reach the threshold for the condition parameter 2 at the future failure time T2, which will potentially cause a failure of the pneumatic system 100. Technical or human damage, which is potentially caused by the failure in the future failure time T2 can thus already be mitigated at the present control time T1 by performing the method according to Figure 2.

### Reference signs

- 2: condition parameter
- 4: time behaviour
- 6: predictive condition state
- 8: condition criterion
- 10: sensor system
- 20: monitoring device
- 22: warning device
- 30: control module
- 100: pneumatic system
- 102: system component
- 103: air compressor
- 104: air dryer line
- 105: air valve
- 106: air tank
- 107: air dryer
- 108: pneumatic working device
- 110: pneumatic brake system
- 112: brake component
- 118: operational brake
- 200: road vehicle
- 300: step
- S1: sensing condition parameter
- S2: determining time behaviour
- S3: determining predictive condition state
- S4: verifying predefined condition criterion
- S5: controlling monitoring device
- T1: present control time
- T2: future failure time

## Claims

1. Method for condition monitoring of a pneumatic system (100) of a road vehicle (200), comprising the steps: sensing (S1) at least one condition parameter (2) of at least one system component (102) of the pneumatic system (100) with a sensor system (10), which is sensorically connected to the pneumatic system (100), wherein the step of sensing (S1) is performed repeatedly, determining (S2) a time behaviour (4) of the repeatedly sensed condition parameter (2), determining (S3) a predictive condition state (6) of the pneumatic system (100) based on the determined time behaviour (4), verifying (S4), if a predefined condition criterion (8) for the pneumatic system (100) is fulfilled in a future operational state of the pneumatic system (100) by the determined predictive condition state (6), and controlling (S5) a monitoring device (20) of the road vehicle (200) based on a verification result, which results from the step of verifying (S4).

2. Method according to claim 1, wherein the pneumatic system (100) comprises at least one of a pneumatic brake system (110) of the road vehicle (200) and a pneumatic suspension system of the road vehicle (200), and wherein the at least one system component (102) of the pneumatic system (100) comprises at least one of a brake component (112) of the pneumatic brake system (110) and a suspension component of the pneumatic suspension system.

3. Method according to claim 1 or 2, wherein the at least one system component (102) of the pneumatic system (100) is at least one of an air compressor (103) of the pneumatic system (100), an air dryer line (104) of the pneumatic system (100), an air dryer (107) of the pneumatic system (100) and an air tank (106) of the pneumatic system (100).

4. Method according to any one of the preceding claims, wherein the at least one condition parameter (2) is at least one of a pressure parameter, a temperature parameter, a vibration parameter and a contamination parameter of the at least one system component (102) of the pneumatic system (100).

5. Method according to any one of the preceding claims, further comprising the step of determining a current condition state of the pneumatic system (100) based on the determined time behaviour (4), wherein the step of verifying (S4) is further based on the determined current condition state.

6. Method according to any one of the preceding claims, wherein in the step of determining (S2) the time behaviour (4), a function of time for the condition parameter (2) is determined based on the repeatedly sensed condition parameter (2), wherein the function of time is based on at least one of a regression analysis, a decision tree model and a machine learning model.

7. Method according to any one of the preceding claims, wherein the predictive condition state (6) is a predictive wear state of the pneumatic system (100), and wherein the predefined condition criterion (8) is a predefined failure criterion for the pneumatic system (100).

8. Method according to any one of the preceding claims, wherein in the step of verifying (S4) the predefined condition criterion (8), it is verified, if a predefined threshold (8) for the predictive condition state (6) of the pneumatic system (100) is reached in the future operational state of the pneumatic system (100).

9. Method according to any one of the preceding claims, wherein in the step of controlling (S5) a warning device (22) of the road vehicle (200) is controlled based on the verification result, wherein the warning device (22) is configured for warning an operator of the road vehicle (200) of a failure state of the pneumatic system (100).

10. Monitoring system (300) for condition monitoring of a pneumatic system (100) of a road vehicle (200), comprising: a sensor system (10), which is configured to repeatedly sense at least one condition parameter (2) of at least one system component (102) of the pneumatic system (100), wherein the sensor system (10) is sensorically connected to the pneumatic system (100), a control module (30), which is configured to determine a time behaviour (4) of the repeatedly sensed condition parameter (2), to determine a predictive condition state (6) of the pneumatic system (100) based on the determined time behaviour (4), to verify, if a predefined condition criterion (8) for the pneumatic system (100) is fulfilled in a future operational state of the pneumatic system (100) based on the determined predictive condition state (6), and to control a monitoring device (20) of the road vehicle (200) based on the verified predefined condition criterion (8).

11. Road vehicle (200), which comprises a pneumatic system (100) and the monitoring system (300) according to claim 10 for condition monitoring of the pneumatic system (100).

12. Method for retrofitting a road vehicle (200) according to claim 11 with a monitoring system (300) according to claim 10 for condition monitoring of a pneumatic system (100) of the road vehicle (200), with the step of: automatically adapting the monitoring system (300) to a configuration of the pneumatic system (100).
